# EUROPEAN PATENT APPLICATION

(11) **EP 4 835 661 A1**
(43) Date of publication of application: **04.11.2026**
(21) Application number: 24918065.4
(22) Date of filing: 02.09.2024
(51) Int. Cl.: G06F 9/48

(54) **TASK SCHEDULING METHOD AND APPARATUS**

(30) Priority: 19.01.2024 CN 202410082980
(71) Applicant: Huawei Technologies Co., Ltd., Shenzhen, Guangdong 518129 (CN)
(72) Inventor: ZHU, Bo, Shenzhen, Guangdong 518129 (CN); XIE, Bin, Shenzhen, Guangdong 518129 (CN); ZHOU, Fengfan, Shenzhen, Guangdong 518129 (CN); DING, Zhaohui, Shenzhen, Guangdong 518129 (CN)
(74) Representative: Isarpatent
(86) International application number: PCT/CN2024/116401
(87) International publication number: WO 2025/152456

(57) **Abstract**

This application provides a task scheduling method and apparatus, and relates to the field of computer technologies. In a scenario in which a plurality of tenants share a scheduler, task scheduling can be independently performed for a tenant, thereby implementing logical isolation between tenants. The method includes: setting a first compute resource for a first tenant in a computing cluster; when a job task of the first tenant needs to be executed, starting, for the first tenant, a first scheduling task used to schedule a compute resource for the job task of the first tenant; then obtaining the job task of the first tenant, and sending the job task to a task queue of the first tenant; and executing the first scheduling task, and scheduling the first compute resource for the job task in the task queue of the first tenant, to execute the job task of the first tenant.

## Description

This application claims priority to Chinese Patent Application No. 202410082980.8, filed with the China National Intellectual Property Administration on January 19, 2024 and entitled "TASK SCHEDULING METHOD AND APPARATUS", which is incorporated herein by reference in its entirety.

### TECHNICAL FIELD

This application relates to the field of computer technologies, and in particular, to a task scheduling method and apparatus.

### BACKGROUND

With the in-depth development of cloud computing, cloud services have become a prominent trend. Multi-tenancy is a core architecture in cloud services, which refers to an architecture where a plurality of tenants share a single software instance.

In a high-performance computing (high-performance computing, HPC) cluster, a software instance serves as a scheduler. As the core management software of the HPC cluster, the scheduler mainly helps tenants manage resources in the HPC cluster and schedule jobs to corresponding resources for execution. For example, the scheduler receives jobs from tenants, and allocates the jobs to compute nodes in the cluster according to specific scheduling policies, so that the compute nodes process the jobs of the users, and monitor and manage a lifecycle of the jobs.

Currently, under the multi-tenant architecture, a single scheduler schedules jobs of a plurality of tenants. In such a solution in which a plurality of tenants share a scheduler, the isolation between the plurality of tenants is poor, and job scheduling processes of different tenants tend to interfere with each other.

### SUMMARY

This application provides a task scheduling method and apparatus, so that in a scenario in which a plurality of tenants share a scheduler, task scheduling can be independently performed for a tenant, thereby implementing logical isolation between tenants.

The following technical solutions are used in this application.

According to a first aspect, this application provides a task scheduling method, applied to a management node in a computing cluster (specifically, a scheduler deployed on the management node). The method includes: setting a first compute resource for a first tenant in the computing cluster; when a job task of the first tenant needs to be executed, starting a first scheduling task for the first tenant, where the first scheduling task is used to schedule a compute resource for the job task of the first tenant; then obtaining the job task of the first tenant, and sending the job task of the first tenant to a task queue of the first tenant; and executing the first scheduling task, and scheduling the first compute resource for the job task in the task queue of the first tenant, to execute the job task of the first tenant.

In this application, because a compute resource can be set for a tenant in the computing cluster and a scheduling task can be started for the tenant, by executing the scheduling task of the tenant, a job task of the tenant is scheduled to the compute resource that is set for the tenant, to execute the job task of the tenant, so that in a scenario in which a plurality of tenants share a scheduler, task scheduling can be independently performed for a tenant, thereby implementing logical isolation between tenants and improving performance of task scheduling for a plurality of tenants in the computing cluster.

In a possible implementation, the task scheduling method provided in this application further includes: setting a scheduling policy for the first tenant.

In a possible implementation, scheduling the first compute resource for the job task in the task queue of the first tenant includes: scheduling the first compute resource for the job task in the task queue based on the scheduling policy.

In this application, a scheduling policy can be configured for a tenant, and different scheduling policies are customized for different tenants based on different job scenarios of the tenants, so that task scheduling is performed for a tenant based on a scheduling policy of the tenant.

In a possible implementation, the task scheduling method provided in this application further includes: setting a tenant priority for the first tenant, where the tenant priority may be used to determine a scheduling priority of the first scheduling task.

In a possible implementation, executing the first scheduling task includes: executing the first scheduling task based on the scheduling priority.

In this application, a tenant priority can be configured for a tenant, to perform task scheduling based on the tenant priority, thereby ensuring fairness of task scheduling between tenants and ensuring that a tenant of a high priority can obtain more scheduling opportunities.

In a possible implementation, executing the first scheduling task based on the scheduling priority includes: determining whether the first scheduling task in a priority queue has a highest scheduling priority, where the priority queue further includes a second scheduling task of a second tenant; and if the first scheduling task has the highest scheduling priority, executing the first scheduling task; or if the first scheduling task does not have the highest scheduling priority, executing the second scheduling task.

In a possible implementation, the task scheduling method provided in this application further includes: dynamically updating the scheduling priority of the first scheduling task based on elapsed runtime of the first scheduling task. A scheduling priority of a scheduling task is dynamically updated, thereby ensuring fairness of task scheduling between tenants and ensuring that a tenant of a high priority can obtain more scheduling opportunities.

In a possible implementation, the computing cluster further includes a second tenant, and a second compute resource of the second tenant and the first compute resource of the first tenant share a physical compute resource of the computing cluster; and the task scheduling method provided in this application further includes: separately dividing the first scheduling task and a second scheduling task of the second tenant into a plurality of subtasks. Therefore, executing the first scheduling task based on the scheduling priority includes: if the first scheduling task has a highest scheduling priority, executing a first subtask of the first scheduling task, and scheduling the first compute resource for the job task in the task queue of the first tenant, to execute the job task of the first tenant; then updating the scheduling priority of the first scheduling task; and if the first scheduling task with an updated scheduling priority does not have the highest scheduling priority, executing a second subtask of the second scheduling task, and scheduling the second compute resource for a job task in a task queue of the second tenant, to execute the job task of the second tenant. A scheduling task is divided, so that scheduling switching can be performed between scheduling tasks of different tenants, thereby implementing successful scheduling of scheduling tasks of different tenants and ensuring a task scheduling opportunity of each tenant.

According to a second aspect, this application provides a task scheduling apparatus. The task scheduling apparatus includes modules configured to implement the method according to one of the first aspect and the possible implementations of the first aspect, for example, a configuration module, a creation module, an obtaining module, a scheduling module, an update module, and a division module.

The task scheduling apparatus has functions of implementing behavior in the method instance according to any one of the first aspect and the possible implementations of the first aspect. The functions may be implemented by hardware, or may be implemented by hardware executing corresponding software. The hardware or the software includes one or more modules corresponding to the foregoing functions.

According to a third aspect, this application provides a compute device, including a memory and at least one processor connected to the memory. The memory is configured to store computer program code, the computer program code includes computer instructions. When the computer instructions are executed by the at least one processor, the compute device is caused to perform the method according to any one of the first aspect and the possible implementations of the first aspect.

According to a fourth aspect, this application provides a computer-readable storage medium, storing computer instructions. When the computer instructions are run on a computer, the method according to any one of the first aspect and the possible implementations of the first aspect is performed.

According to a fifth aspect, this application provides a computer program product. The computer program product includes computer instructions. When the computer instructions are run on a computer, the method according to any one of the first aspect and the possible implementations of the first aspect is performed.

According to a sixth aspect, this application provides a chip system, including a processor, configured to invoke a computer program from a memory and run the computer program, so that a storage device in which the chip system is installed performs the method according to any one of the first aspect and the possible implementations of the first aspect.

It should be understood that, for beneficial effects achieved by the technical solutions in the second aspect to the sixth aspect and the corresponding possible implementations in this application, refer to the foregoing technical effects of the first aspect and the corresponding possible implementations. Details are not described herein again.

### BRIEF DESCRIPTION OF DRAWINGS

FIG. 1 is a diagram 1 of an architecture of an HPC cluster according to an embodiment of this application;
FIG. 2 is a diagram 2 of an architecture of an HPC cluster according to an embodiment of this application;
FIG. 3 is a diagram 3 of an architecture of an HPC cluster according to an embodiment of this application;
FIG. 4 is a diagram of hardware of a management node according to an embodiment of this application;
FIG. 5 is a diagram of a software architecture of a scheduler according to an embodiment of this application;
FIG. 6 is a diagram of a logical cluster creation process in a task scheduling method according to an embodiment of this application;
FIG. 7 is a schematic flowchart 1 of a task scheduling method according to an embodiment of this application;
FIG. 8 is a block diagram 1 of a task scheduling method according to an embodiment of this application;
FIG. 9 is a block diagram 2 of a task scheduling method according to an embodiment of this application;
FIG. 10 is a diagram of a scheduling process division process in a task scheduling method according to an embodiment of this application;
FIG. 11 is a schematic flowchart 2 of a task scheduling method according to an embodiment of this application;
FIG. 12 is a diagram of scheduling task state switching in a task scheduling method according to an embodiment of this application;
FIG. 13 is a diagram 1 of a structure of a task scheduling apparatus according to an embodiment of this application; and
FIG. 14 is a diagram 2 of a structure of a task scheduling apparatus according to an embodiment of this application.

### DESCRIPTION OF EMBODIMENTS

A term "and/or" in this specification describes only an association relationship between associated objects and represents that three relationships may exist. For example, A and/or B may represent the following three cases: Only A exists, both A and B exist, and only B exists.

In this specification and the claims in embodiments of this application, terms "first", "second", and the like are intended to distinguish between different objects but do not indicate a particular order of the objects.

In embodiments of this application, a word such as "example" or "for example" indicates an example, an instance, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner.

In descriptions of embodiments of this application, "a plurality of" means two or more, unless otherwise specified.

First, some technical terms related to a task scheduling method and apparatus provided in embodiments of this application are explained and described.

### 1. Multi-tenancy

Multi-tenancy is a software architecture. In a multi-tenant architecture, a single software instance (or referred to as an application instance) serves a plurality of tenants by using a multi-tenant technology (or referred to as a multi-tenancy technology), that is, the plurality of tenants use a same program. For example, software as a service (software as a service, SaaS) is a multi-tenant architecture.

It should be noted that, in the multi-tenant architecture, it needs to be ensured that a plurality of tenants are unaware of each other, that is, data isolation between the plurality of tenants is implemented in a same program.

In embodiments of this application, a renter of a software instance may be referred to as a tenant or a customer. In the following embodiments, "tenant" and "customer" are a same concept.

It may be understood that each tenant has one or more users, and the user is an actual user of a software instance of the tenant.

With the in-depth development of cloud computing, multi-tenancy has become a core architecture in cloud services. Currently, computing clusters (for example, HPC clusters) are also rapidly evolving towards cloud services. An HPC cluster also has a multi-tenant requirement, that is, a plurality of tenants share a single software instance in the HPC cluster. For example, the software instance may be a scheduler of the HPC cluster.

In the HPC cluster, as core management software, the scheduler can help tenants manage compute resources of compute nodes in the HPC cluster and schedule, to a corresponding compute resource for execution, a job (or referred to as a job task) submitted by a user.

### 2. Multi-tenant task scheduling

Multi-tenant task scheduling may also be referred to as tenant scheduling, and means switching policies and procedures between a plurality of tenants when scheduling processes of the plurality of tenants share a scheduler. In embodiments of this application, a job scheduling process of one tenant is abstracted as one task (or scheduling task), and scheduling tasks of a plurality of tenants by a scheduler is multi-tenant task scheduling.

Special attention should be paid to a difference between task scheduling (that is, tenant scheduling) described above and job scheduling (that is, job task scheduling). Job scheduling means performing algorithm and procedure matching between a plurality of jobs submitted by a tenant and compute resources owned by the tenant.

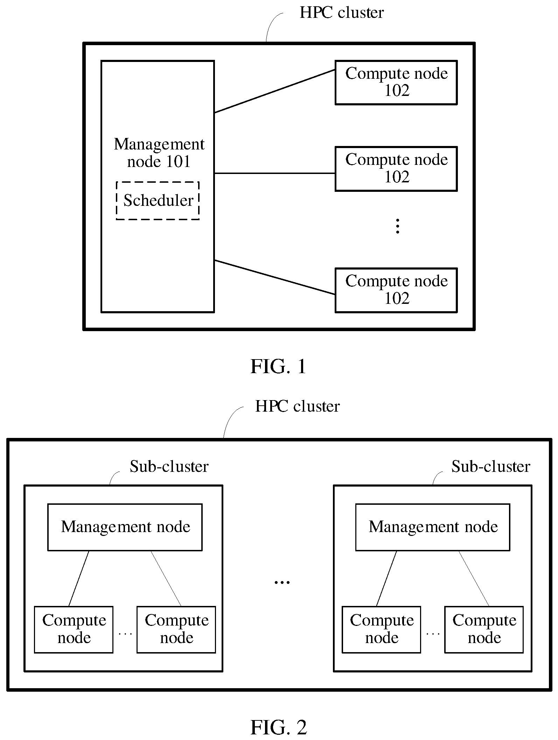

For example, a computing cluster is an HPC cluster. Referring to FIG. 1, an HPC cluster includes one or more management nodes 101 and a plurality of compute nodes (or referred to as a plurality of working nodes) 102. A scheduler is deployed on the management node 101, and the scheduler allocates a compute resource to a job submitted by a user in a tenant.

In some implementations, the management node 101 may include a login node and a master node. The login node is used by a user to log in to the scheduler. For example, a client of the scheduler is deployed on the login node. A user-level user and a management-level user may log in to the scheduler through the client on the login node. The master node is configured to implement a management function of the scheduler. Other functional modules of the scheduler, for example, a user management module, a job management module, a resource management module, and a scheduling policy management module, are deployed on the master node.

Currently, in HPC clusters, a single HPC cluster is usually configured for one tenant, and each tenant has an independent scheduler. Currently, most HPC schedulers (schedulers in HPC clusters) such as LSF, Slurm, and openPBS, AI cluster scheduling software Kubernetes, and big data schedulers YARN do not support multi-tenancy, that is, these schedulers only support a correspondence between one scheduler and one tenant, and do not support task scheduling in a multi-tenant architecture.

Referring to FIG. 2, a multi-tenant task scheduling method is that an original HPC cluster is divided into a plurality of independent sub-clusters, each tenant corresponds to one independent sub-cluster, each sub-cluster is provided with an independent management node, and a scheduler is deployed on the management node, to schedule a job submitted by the tenant. In the method, an independent physical cluster (that is, the foregoing sub-cluster) is allocated to each tenant, and physical resources of sub-clusters corresponding to different tenants are isolated. Therefore, isolation between tenants is good, but an independent management node needs to be configured for a sub-cluster of each tenant. As a quantity of tenants increases, a quantity of management nodes also increases, causing high costs of multi-tenant task scheduling.

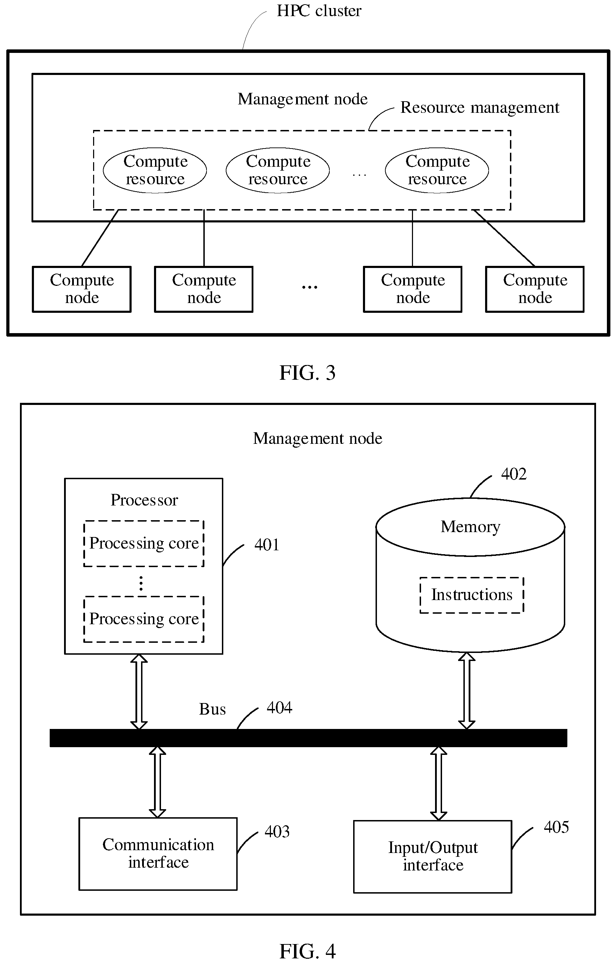

Referring to FIG. 3, another multi-tenant task scheduling method is that a plurality of tenants still share a single HPC cluster, and compute resources of compute nodes in the HPC cluster are pooled and are logically divided and managed, that is, the plurality of tenants share a physical compute resource of the HPC cluster. In the method, compute resources that correspond to the plurality of tenants and that are used for job processing are isolated, and a scheduler deployed on a management node in the HPC cluster performs unified task scheduling for the plurality of tenants. In the method, only the compute resources of the plurality of tenants are isolated, causing low isolation.

To resolve the foregoing problem, embodiments of this application provide a task scheduling method. The method is applied to a management node in a computing cluster. In the method, the management node sets a first compute resource for a first tenant in the computing cluster; when a job task of the first tenant needs to be executed, starts, for the first tenant, a first scheduling task that can be used to schedule a compute resource for the job task of the first tenant; then obtains the job task of the first tenant, and sends the job task of the first tenant to a task queue of the first tenant; and executes the first scheduling task, and schedules the first compute resource for the job task in the task queue of the first tenant, to execute the job task of the first tenant. In the method, because one scheduling task is started and a compute resource is set for each tenant, independent task scheduling may be performed for the tenant. Therefore, in a scenario in which a plurality of tenants share a scheduler, the tenants can be logically isolated.

The task scheduling method provided in embodiments of this application is performed by the management node. Optionally, the management node may be a server, for example, a central server, an edge server, or a local server in a local data center. In some embodiments, the management node may alternatively be a terminal device such as a desktop computer, a notebook computer, or a smartphone.

For example, further referring to FIG. 4, the management node may include one or more processors 401, a memory 402, and a communication interface 403. The processor 401, the memory 402, and the communication interface 403 may be connected to each other through a bus 404, or may be connected to each other in another manner. Optionally, various components included in the management node may be implemented in hardware including one or more signal processing and/or application-specific integrated circuits, software, or a combination of hardware and software.

The processor 401 is a control center of the management node. The processor 401 may be a CPU, or may be another general-purpose processor or the like, for example, may be a microprocessor or any conventional processor. Optionally, the general-purpose processor 401 may include one or more processing cores.

A controller in the processor 401 is a nerve center and a command center of the management node. The controller may generate an operation control signal based on instruction operation code and a time sequence signal, to complete control of instruction fetching and instruction execution. Optionally, the memory may be further disposed in the processor 401, and is configured to store instructions and data.

The memory 402 includes but is not limited to a random access memory (random access memory, RAM), a read-only memory (read-only memory, ROM), an erasable programmable read-only memory (erasable programmable read-only memory, EPROM), a flash memory, an optical storage, a magnetic disk storage medium or another magnetic storage device, or any other medium that can carry or store expected program code in an instruction form or in a data structure form and that can be accessed by a computer. In this embodiment of this application, the memory 402 may store information such as computer instructions.

In a possible implementation, the memory 402 may be independent of the processor 401. The memory 402 may be connected to the processor through the bus 404, and is configured to store data, instructions, or program code. When invoking and executing the instructions or program code stored in the memory, the processor can implement related steps in the method provided in embodiments of this application.

In another possible implementation, the memory 402 may alternatively be integrated with the processor.

The communication interface 403 may be a transceiver module, and is configured to communicate with another device or a communication network, for example, communicate with an ethernet, a RAN, or a wireless local area network (wireless local area network, WLAN). The communication interface 403 may receive an instruction, a message, data, or the like. The transceiver module may be an apparatus such as a transceiver or a transceiver machine. Optionally, the communication interface 403 may alternatively be a transceiver circuit located in the processor, and is configured to implement a signal input and a signal output of the processor. The communication interface 403 may be a wired interface (port), for example, a fiber distributed data interface (fiber distributed data interface, FDDI) or a gigabit ethernet (gigabit ethernet, GE) interface. Alternatively, the communication interface 403 may be a wireless interface.

The bus 404 may be an industry standard architecture (industry standard architecture, ISA) bus, a peripheral component interconnect (peripheral component interconnect, PCI) bus, an extended industry standard architecture (extended industry standard architecture, EISA) bus, or the like. The bus may be classified into an address bus, a data bus, a control bus, and the like. The bus may alternatively be classified into a serial bus and a parallel bus. For ease of representation, only one bold line represents the bus in FIG. 4, but this does not mean that there is only one bus or only one type of bus.

Optionally, the management node in this embodiment of this application may further include an input/output interface 405. The input/output interface 405 is configured to connect to an input device, and receive information (for example, login information of a tenant and a job submitted by the tenant) entered by a user through the input device. The input device includes but is not limited to a keyboard, a touchscreen, a microphone, and the like. The input/output interface 405 is further configured to connect to an output device, and output a processing result of the processor 401. The output device includes but is not limited to a display, a printer, and the like.

It should be noted that the management node in FIG. 4 is merely an example of the management node. The management node may have more or fewer components than those shown in FIG. 4, may combine two or more components, or may have different component configurations.

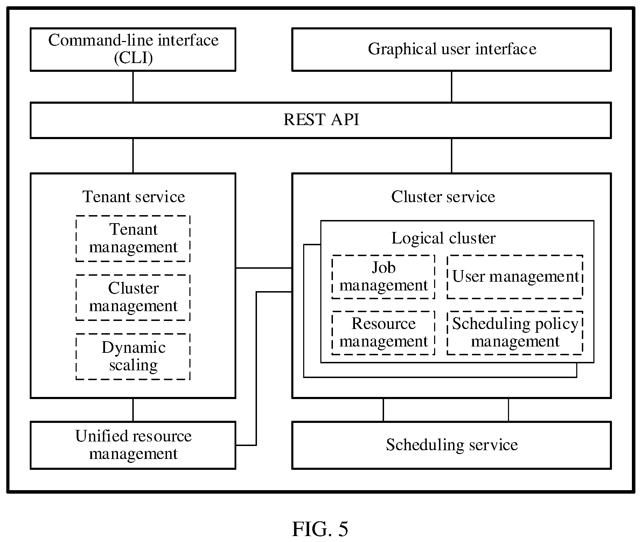

It should be understood that, in embodiments of this application, a scheduler deployed on a management node in a computing cluster performs a task scheduling method. FIG. 5 shows a software architecture of a scheduler deployed on a management node according to an embodiment of this application. The scheduler includes a command-line interface (CLI), a graphical user interface (Portal), a REST API, a tenant service, a cluster service, a scheduling service, and unified resource management. The scheduler shown in FIG. 5 supports multi-tenancy.

The command-line interface (CLI) is a tool used by a user to log in to the scheduler, and is deployed on a login node in the management node.

The graphical user interface (Portal) is an interface used by a user to submit a job, and is deployed on a login node in the management node.

The REST API is an application programming interface (application programming interface, API) that complies with representational state transfer (representational state transfer, REST) architecture specifications, and application programs or devices may connect to and communicate with each other based on the REST API.

The tenant service is used for tenant management, cluster management, and dynamic scaling management. Tenant management may include but is not limited to tenant permission management, cluster management includes but is not limited to maintaining a correspondence between a tenant and a logical cluster, and dynamic scaling management includes but is not limited to adding or deleting a node in a computing cluster.

The cluster service is configured to generate a logical cluster, encapsulate data and state information during task scheduling, and maintain a relationship between a tenant and a logical cluster. The cluster service may create a plurality of logical clusters. Each tenant corresponds to one or more logical clusters. Each logical cluster includes functional modules for job management, user management, resource management, and scheduling policy management.

It should be noted that, in this embodiment of this application, logical clusters of tenants are isolated from each other. In other words, each tenant has a logical cluster of the tenant, and job management, user management, resource management, and scheduling policy management in the logical cluster separately manage each tenant. In other words, each tenant is independently managed. For example, in one tenant, numbers of jobs submitted by users are consecutive, and numbers of jobs of different tenants are not related to each other. A user in each tenant is also independently managed. Each tenant has an independent scheduling policy (a job task processing policy or method) corresponding to the tenant, and a customized scheduling policy can be configured for the tenant. Further, compute resources used to process jobs of tenants are also different.

In this embodiment of this application, because logical clusters of tenants are isolated from each other, the tenants are unaware of each other. For one tenant, it is equivalent to that the tenant corresponds to an independent computing cluster. A plurality of logical clusters share a resource of a scheduler deployed on one management node, and the scheduler schedules compute resources (that are set for a plurality of tenants) for job tasks of the tenants, thereby implementing native support for a multi-tenant function of the scheduler.

The scheduling service is configured to provide other services during task scheduling. For example, in a large-scale multi-tenant scenario, the scheduling service may adjust a tenant priority, divide a scheduling process, construct a scheduling context (that is, an execution state of a scheduling task), invoke a context switch, manage scheduling processes in parallel or in series, and the like.

The unified resource management is used by users to manage resources, for example, create or delete resources corresponding to logical clusters. The unified resource management can shield differences between different resource providers and provide a standardized interface for the tenant service, and can be interconnected with any cloud or offline cluster resource management software.

Based on the foregoing descriptions, the scheduler shown in FIG. 5 can support multi-tenancy, and a plurality of tenants share a single software instance (for example, one scheduler), thereby greatly reducing occupation of the management node, and a larger quantity of tenants indicates lower costs. In addition, because a software instance does not need to be deployed for each tenant, operations and maintenance work of tenants for software instances can be reduced.

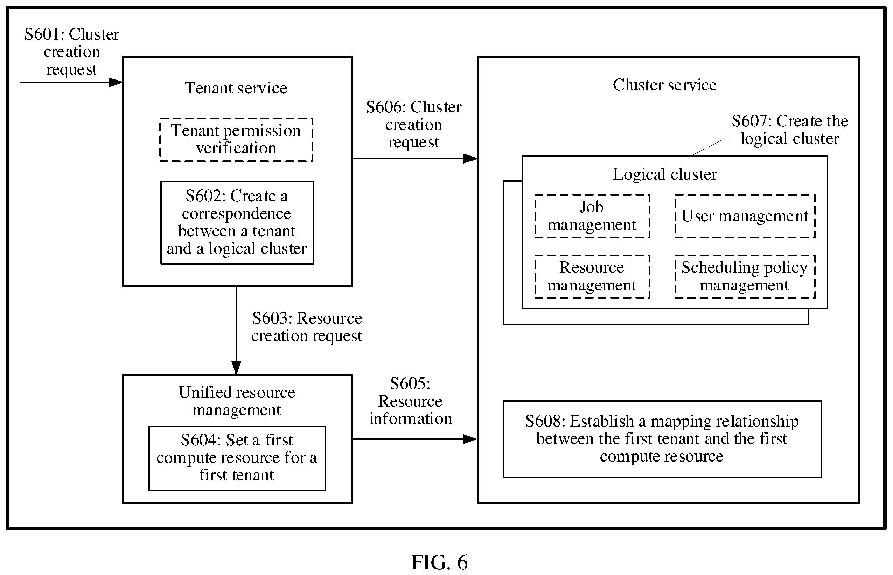

With reference to the software architecture of the scheduler shown in FIG. 5, a logical cluster may be created for each tenant in the computing cluster, and the created logical cluster may be further deleted, modified, or queried during running. With reference to FIG. 6, the following uses a tenant (referred to as a first tenant below) as an example to describe a process of creating a logical cluster for a tenant.

S601: A tenant service module receives a cluster creation request triggered by a tenant administrator.

When a tenant (for example, referred to as the first tenant) is newly added to the computing cluster, the tenant administrator (operations and maintenance personnel) of the computing cluster sends the cluster creation request to the tenant service, where the creation request is used to request to create a logical cluster of the first tenant. Optionally, the cluster creation request may include information about the first tenant (for example, an identifier of the first tenant) and resource requirement information of the first tenant. The resource requirement information indicates a requirement of the first tenant for a compute resource used for job processing. For example, the resource requirement information indicates a quantity of compute nodes and configuration requirements for the compute nodes (for example, a quantity of cores and a memory size).

S602: The tenant service creates a correspondence between a tenant and a logical cluster.

In an implementation, the tenant service may generate an identifier of one logical cluster for the first tenant, and store a correspondence between the identifier of the first tenant and the identifier of the logical cluster, to establish a correspondence between the first tenant and the logical cluster.

Optionally, after the tenant service receives the cluster creation request, the tenant service further verifies whether the first tenant has cluster creation permission. For example, the tenant management function in the tenant service performs permission verification on the first tenant to determine whether the first tenant has the logical cluster creation permission, and when the first tenant has the logical cluster creation permission, the tenant service establishes the correspondence between the first tenant and the logical cluster.

S603: The tenant service sends a resource creation request to the unified resource management.

The resource creation request is used to request to set a first compute resource for the first tenant, and the compute resource is used to process a job of the first tenant. The resource creation request includes the resource requirement information of the first tenant.

S604: After receiving the resource creation request, the unified resource management sets the first compute resource for the first tenant.

That the unified resource management sets a compute resource for the first tenant is specifically allocating a compute resource (for example, allocating a processing core and a memory) of a compute node in the computing cluster to the first tenant.

S605: The unified resource management sends resource information to the cluster service.

The resource information is information about the first compute resource that is set for the first tenant. For example, if the allocated first compute resource is a compute node, the resource information may be an IP address of the compute node, a name of the compute node, or the like.

S606: The tenant service sends the cluster creation request to the cluster service.

S607: After receiving the cluster creation request sent by the tenant service, the cluster service creates the logical cluster.

That the cluster service creates the logical cluster includes creating a functional module for job management, a functional module for user management, a module for scheduling policy management, and a module for resource management. The logical cluster of the first tenant is logically isolated from a logical cluster of another tenant. The logical cluster is used to manage a job of the first tenant, manage a user of the first tenant, manage a scheduling policy of the first tenant, and manage a compute resource used to execute the job of the first tenant.

S608: After receiving the resource information sent by the unified resource management, the cluster service establishes a mapping relationship between the first tenant and the first compute resource.

After creating the logical cluster of the first tenant, the cluster service stores the mapping relationship between the first tenant and the first compute resource, which is also equivalent to storing a mapping relationship between the logical cluster and the first compute resource.

Creation of the logical cluster of the first tenant is completed by performing S601 to S608. It may be understood that, in this embodiment of this application, in a process of creating the logical cluster or after the logical cluster is created, the logical cluster may be configured, that is, a parameter configuration is performed on the first tenant. Then, task scheduling may be performed for a plurality of tenants based on the created logical cluster.

In this embodiment of this application, each tenant in the computing cluster has a corresponding tenant configuration item (or referred to as a configuration parameter). In tenant configuration items, some configuration items are tenant-shared configuration items, and the tenant-shared configuration items are configured by the operations and maintenance personnel; and some configuration items are tenant-specific configuration items, and the tenant-specific configuration items are independently configured by each tenant. Table 1 shows an example of a tenant configuration item.

**Table 1**

| Configuration item type | Configuration category | Configuration name | Configuration item description |
|---|---|---|---|
| Tenant-shared configuration item | External interface | IP | Listening address |
| | | Port | Listening port |
| | System parameter | certificate | Certificate configuration |
| | | db_url | Database address |
| | | total_tenant | Maximum quantity of tenants supported |
| | | log_path | Log path |
| | | res_conns | Resource provider |
| | | ha_congfig | High availability configuration |
| Tenant-specific configuration item | Permission control | user_sync_executor | Tenant user synchronization method |
| | | user.roles | User role configuration |
| | Limit | Total_job | Maximum quantity limit of online jobs |
| | | Total_running_job | Maximum quantity limit of concurrent running jobs |
| | Tenant priority | weight | Weight: A larger weight indicates a higher tenant priority, a configuration range is 1 to 65536, and a default value is 1024. |
| | | qos | Quality of service: Higher QoS indicates a higher tenant priority and a larger upper limit of tenant running time, a configuration range is 0 to 100%, and a default value is 100%. |
| | Data export | data.export.dir | Data export directory |
| | Scheduling policy | accountConfigs | Account configuration |
| | | accountPolicyConfigs | Resource allocation policy |
| | | queueConfigs | Queue configuration |
| | | respoolConfigs | Resource pool configuration |
| | | userConfigs | User configuration |

With reference to Table 1, it can be learned that a scheduling policy and a tenant priority are configured for the first tenant. In this application, an independent scheduling policy can be configured for a tenant. For example, different scheduling policies are customized for different tenants based on different job scenarios of the tenants, so that task scheduling is performed for a tenant based on a scheduling policy of the tenant. In addition, in this application, a tenant priority can be configured for a tenant, to perform task scheduling based on the tenant priority, thereby ensuring fairness of task scheduling between tenants and ensuring that a tenant of a high priority can obtain more scheduling opportunities.

Optionally, the created logical cluster may be further deleted, modified, or queried subsequently.

When exiting the computing cluster, the first tenant may send a cluster deletion request to the tenant service, where the cluster deletion request may include the identifier of the first tenant. Therefore, the tenant service deletes the correspondence between the first tenant and the logical cluster, and separately sends the cluster deletion request to the unified resource management and the cluster service, the unified resource management deletes the first compute resource corresponding to the logical cluster, and the cluster service deletes the mapping relationship between the first tenant and the first compute resource, and deletes the logical cluster and the configuration item of the first tenant.

When related information of the first tenant or the logical cluster needs to be queried, a query request may be sent to the tenant service, for example, to query the configuration item of the first tenant or query information about the logical cluster corresponding to the first tenant, so that the tenant service or the cluster service can return the configuration item or cluster information.

When related information of the first tenant or the logical cluster needs to be modified, a modification request may be sent to the tenant service, for example, to request to modify the configuration item of the first tenant or modify information about the logical cluster (for example, modify a configuration of the first compute resource), so that a related module can perform modification according to a modification requirement.

With reference to the descriptions of the architecture of the scheduler provided in this embodiment of this application in FIG. 4, the computing cluster can support multi-tenancy, and a plurality of tenants share one scheduler. In addition, a scheduling process of each tenant is defined as one scheduling task, and a compute resource and a scheduling task that are used to process a job task are set for each tenant. After obtaining job tasks of a plurality of tenants, the scheduler executes scheduling tasks of the tenants, and schedules the jobs of the tenants to corresponding compute resources to execute the job tasks of the tenants.

The task scheduling method provided in embodiments of this application may be applied to a scenario of a computing cluster of a multi-tenant architecture based on a cloud service, or may be applied to a scenario of a computing cluster of a multi-tenant architecture based on a physical resource. This is not specifically limited.

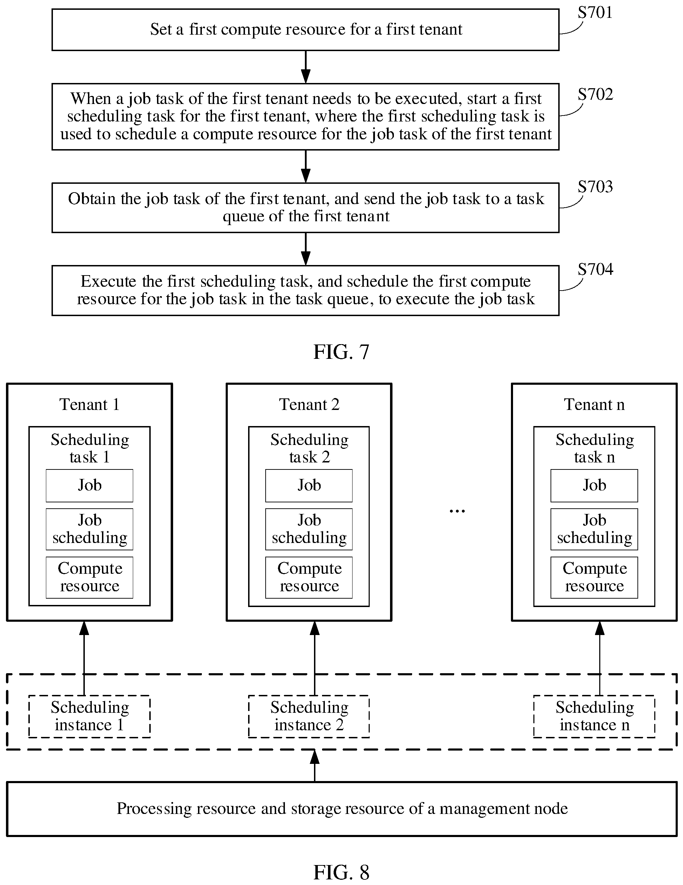

With reference to the related descriptions of the computing cluster, the management node, and the scheduler in the foregoing embodiments, the following describes a process of a task scheduling method provided in an embodiment of this application. The task scheduling method is applied to the management node in the computing cluster, that is, performed by the management node in the computing cluster (specifically, performed by the scheduler deployed on the management node). The following uses the scheduler as an execution body for description. As shown in FIG. 7, the method includes S701 to S704.

S701: Set a first compute resource for a first tenant.

In this embodiment of this application, the computing cluster may include a plurality of tenants, and the scheduler may set (that is, allocate) a corresponding compute resource for each tenant in the computing cluster. For example, the computing cluster includes the first tenant and a second tenant, the first compute resource is set for the first tenant, a second compute resource is set for the second tenant, and the first compute resource and the second compute resource share a physical compute resource of the computing cluster.

The first tenant is used as an example. For a specific process in which the scheduler sets the first compute resource for the first tenant, refer to the descriptions of S603 to S605 in the process of creating the logical cluster of the first tenant in the foregoing embodiment. Details are not described herein again.

S702: When a job task of the first tenant needs to be executed, start a first scheduling task for the first tenant, where the first scheduling task is used to schedule a compute resource for the job task of the first tenant.

In this embodiment of this application, the first scheduling task is a scheduling process of the job task of the first tenant, and each tenant corresponds to one scheduling task. Starting the first scheduling task for the first tenant may be understood as: creating the first scheduling task for the first tenant, or generating the first scheduling task for the first tenant.

S703: Obtain the job task of the first tenant, and send the job task to a task queue of the first tenant.

A task queue of a tenant includes job tasks submitted by a plurality of users in the tenant. Optionally, job tasks in the task queue of the first tenant may be sorted based on receiving time of the job tasks, or may be sorted by using another method. This is not limited in this embodiment of this application.

S704: Execute the first scheduling task, and schedule the first compute resource for the job task in the task queue, to execute the job task.

That the scheduler executes a scheduling task specifically includes: executing a scheduling task of a tenant based on a scheduling resource allocated to the scheduling task (a resource used to execute the scheduling task in the scheduler).

It may be understood that the scheduling resource may be a process, a thread, or a coroutine, and is specifically selected according to an actual requirement. This is not limited in this application. A relationship between a process, a thread, and a coroutine is as follows: One process may include a plurality of threads, and one thread may include a plurality of coroutines. For ease of description, in this embodiment of this application, an example in which a scheduling resource of the scheduler is a scheduling thread is used for description.

In this embodiment of this application, that the scheduler executes a scheduling task of a tenant actually is that the scheduler invokes a thread to execute the scheduling task. The scheduler may create a plurality of scheduling threads to execute the scheduling task. When the scheduler has sufficient resources (namely, resources used by the scheduler in the management node), the scheduler may allocate an independent scheduling resource to each of a plurality of scheduling tasks, for example, one scheduling thread is used to execute one scheduling task (one tenant corresponds to one independent scheduling thread), and the scheduler concurrently executes scheduling tasks of a plurality of tenants. When the scheduler has insufficient scheduling resources, a plurality of scheduling tasks share the scheduling resources of the scheduler, for example, one scheduling thread is used to execute a plurality of scheduling tasks (a plurality of tenants share one scheduling thread), and the scheduler sequentially executes scheduling tasks of the plurality of tenants.

In some implementations, resources of the scheduler may be evenly allocated to a plurality of scheduling tasks, or different proportions of resources may be allocated to a plurality of scheduling tasks based on other factors (for example, the foregoing tenant weight and/or quality of service configured for the tenant). This is not limited in this embodiment of this application.

In conclusion, in the task scheduling method provided in this embodiment of this application, because a compute resource can be set for each tenant in the computing cluster and a scheduling task can be started for the tenant, by executing the scheduling task of the tenant, a job task of the tenant is scheduled to the compute resource that is set for the tenant, to execute the job task of the tenant, so that in a scenario in which a plurality of tenants share a scheduler, task scheduling can be independently performed for a tenant, thereby implementing logical isolation between tenants and improving performance of task scheduling for a plurality of tenants in the computing cluster.

It can be learned from the descriptions in the foregoing embodiment that the scheduler may set a scheduling policy for each tenant. Based on this, in an implementation, in S704, scheduling the first compute resource for the job task in the task queue of the first tenant includes: scheduling the first compute resource for the job task in the task queue based on the scheduling policy.

For example, the scheduling policy may be scheduling a compute resource for a job task based on receiving time of job tasks, priorities of the job tasks, or the like. For example, the first compute resource is scheduled based on the priorities of the job tasks. Assuming that a priority of a first job task is higher than that of a second job task, the first compute resource is preferentially scheduled for the first job task.

In this embodiment of this application, the scheduler is deployed on the management node. For ease of description, in the following embodiments, a resource of the management node is a resource of the scheduler, and the resource of the management node is used to perform task scheduling for a tenant.

In the computing cluster, generally, resources of the management node for deploying the scheduler are limited. In different scenarios, resource allocation of the management node needs to be considered in a multi-tenant task scheduling process. The resources of the management node include a processing resource (such as a processor/processing core) and a storage resource (such as a memory).

The task scheduling method provided in this embodiment of this application may be applied to scenarios of different tenant scales. The following uses three different tenant scales as examples for description. Scenarios of the three different tenant scales are respectively Scenario 1 (small-scale multi-tenant scenario), Scenario 2 (medium-scale multi-tenant scenario), and Scenario 3 (large-scale multi-tenant scenario).

### Scenario 1: Small-scale multi-tenant scenario

In the small-scale multi-tenant scenario, there are few tenants, and the management node has sufficient resources. In this case, when executing a scheduling task, the scheduler may create one scheduling thread for each scheduling task, that is, allocate an independent resource in the management node to each tenant as a scheduling resource, and allocate a scheduling resource that can meet a requirement to each scheduling task, to execute the scheduling task of the tenant.

Referring to FIG. 8, a tenant 1 to a tenant n each correspond to one scheduling thread, and a scheduling manner of a plurality of scheduling tasks is that a plurality of scheduling threads run in parallel, that is, the scheduler may invoke a plurality of scheduling threads to execute scheduling tasks of a plurality of tenants in parallel, thereby implementing parallel scheduling processes of the tenants and improving scheduling efficiency. For one tenant, a scheduling thread executes a scheduling task of the tenant, and schedules a job task in a task queue of the tenant to a compute resource allocated to the tenant, to execute the job task in the task queue of the tenant. In other words, scheduling processes of the tenants are sequenced, that is, time-sharing scheduling (serial scheduling) is performed.

In an implementation, a range of processing resources and storage resources, of the management node, that are occupied by a scheduling thread may be configured based on an operating system kernel mechanism. For example, the resources of the management node may be classified based on a Cgroup mechanism of a Linux kernel, to create different scheduling threads. It may be understood that Cgroup may control allocation of processing resources and storage resources for processes or threads.

For example, with reference to some configuration items of Cgroup shown in Table 2, the processing resources and storage resources can be allocated by using key configurations such as cpuset.cpus and memory.limit_in_bytes in Cgroup.

**Table 2**

| Parameter name | Parameter description |
|---|---|
| cpuset.cpus | CPU usage range |
| memory.limit_in_bytes | Limit on maximum memory usage |

### Scenario 2: Medium-scale multi-tenant scenario

In the medium-scale multi-tenant scenario, the management node may have insufficient resources. In this case, a scheduling resource may be allocated to each scheduling task based on a tenant priority. For example, one scheduling thread is created for each scheduling task based on the tenant priority, to execute the scheduling task of the tenant.

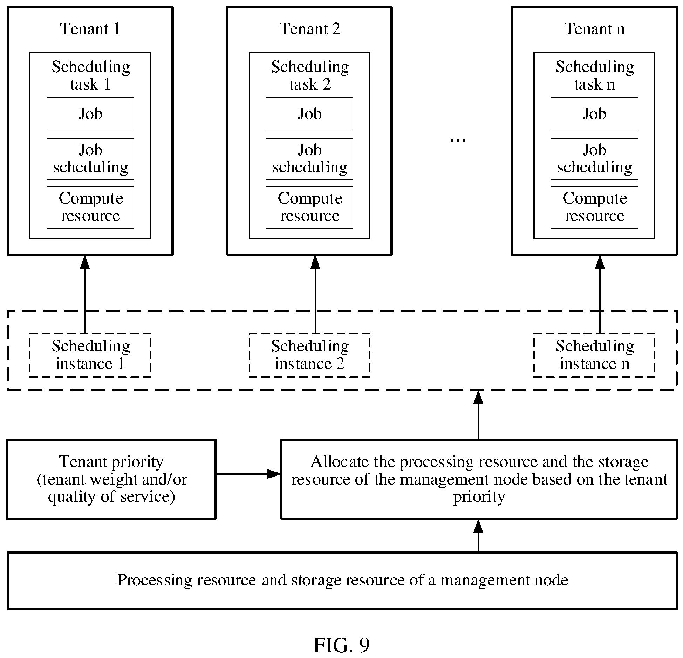

Referring to FIG. 9, in this embodiment of this application, a tenant priority is configured for each tenant, and the tenant priority may include a tenant weight and/or quality of service. A relationship between a tenant priority and a tenant weight is that a larger tenant weight of a tenant indicates a higher tenant priority. For example, for a tenant with an urgent task, a larger tenant weight indicates a higher tenant priority. A relationship between a tenant priority and quality of service of a tenant is that higher quality of service of the tenant indicates a higher tenant priority.

Optionally, there is a function relationship between a tenant priority, a tenant weight, and quality of service, and a tenant priority may be obtained through calculation based on a preset function relationship.

In an implementation, when the resources of the management node are allocated to tenants, a resource allocation ratio may be determined based on tenant priorities of a plurality of tenants, and then corresponding proportions of resources may be allocated to different scheduling tasks based on the resource allocation ratio.

For example, if the tenant priority includes the tenant weight, the computing cluster includes three tenants, and tenant weights of the three tenants are respectively 100, 20, and 10, it is determined that the resource allocation ratio is 10:2:1. In this case, the processing resources and storage resources of the management node are allocated based on 10:2:1, and three scheduling threads are created, to execute scheduling tasks of the three tenants.

For example, with reference to some configuration items of Cgroup shown in Table 3, the processing resources and storage resources can be allocated by using key configurations such as cpuset.cpus, cpu.cfs_quota_us&cpu.cfs_period_us, and cpu.shares in Cgroup.

**Table 3**

| Parameter name | Parameter description |
|---|---|
| cpuset.cpus | CPU usage range |
| cpu.cfs_quota_us& cpu.cfs_period_us | CPU usage time does not exceed cfs_quota_us in each cfs_period_us |
| cpu.shares | Relative proportion of CPU available time |

In this embodiment of this application, the resources of the management node are allocated to a plurality of scheduling tasks based on tenant priorities, so that it can be ensured that more scheduling resources used to execute a scheduling task are allocated to a customer of a high priority, thereby making the tenant of a high priority obtain more scheduling opportunities.

### Scenario 3: Large-scale multi-tenant scenario

In the large-scale multi-tenant scenario, the management node has insufficient resources (for example, resource shortage). In this case, a plurality of scheduling tasks share the resources of the management node. For example, in a plurality of created scheduling threads, one scheduling thread is used to execute a plurality of scheduling tasks.

It may be understood that there is a correspondence (or a mapping relationship) between a tenant (or a scheduling task of a tenant) and a scheduling thread. In this embodiment of this application, hash values of all scheduling tasks may be calculated by using tenant names as key values, and different hash values correspond to different queues (each scheduling thread corresponds to one queue, which is equivalent to that different hash values correspond to different scheduling threads), thereby mapping scheduling tasks of tenants to corresponding queues. The queue is a queue of scheduling tasks of a plurality of tenants, and a plurality of scheduling tasks are arranged in the queue based on scheduling priorities of the scheduling tasks. Therefore, the queue may be referred to as a priority queue. The foregoing tenant priority may be used to determine a scheduling priority of a scheduling task of the tenant. Details are specifically described in the following embodiments.

In an implementation, quantities of resources of the management node occupied by a plurality of scheduling threads may be the same or may be different. For example, the resources of the management node are allocated by using information such as a quantity of tenants corresponding to one scheduling thread and/or tenant priorities of at least two tenants corresponding to the scheduling thread.

In this embodiment of this application, in the large-scale multi-tenant scenario, the priority queue includes the first scheduling task of the first tenant and a second scheduling task of the second tenant. In a process in which the scheduler performs task scheduling for a plurality of tenants, the scheduler invokes one scheduling thread to execute scheduling tasks of the plurality of tenants, including: executing the scheduling tasks based on scheduling priorities of the plurality of scheduling tasks.

The first tenant is used as an example. Executing the first scheduling task of the first tenant specifically includes: executing the first scheduling task based on a scheduling priority of the first scheduling task. Specifically, it is determined whether the first scheduling task in the priority queue has a highest scheduling priority; and if the first scheduling task has the highest scheduling priority, the first scheduling task is executed; or if the first scheduling task does not have the highest scheduling priority, the second scheduling task is executed. In other words, scheduling tasks in the priority queue are executed in descending order of scheduling priorities; and when a scheduling priority of the first scheduling task is higher than that of the first scheduling task, the first scheduling task is executed first; or when a scheduling priority of the first scheduling task is lower than that of the second scheduling task, the second scheduling task is executed first.

In an implementation, for each scheduling task in the priority queue, the scheduling task may be divided (that is, a job scheduling process of a tenant is divided), each scheduling task is divided into a plurality of slices, and one slice may be referred to as one subtask. In this way, one scheduling task includes a plurality of subtasks. For example, for the first scheduling task and the second scheduling task in the priority queue, the first scheduling task and the second scheduling task of the second tenant are separately divided into a plurality of subtasks.

Optionally, the foregoing process of dividing a scheduling task of a tenant specifically includes: using an execution point that can be interrupted in a scheduling process of each tenant (the scheduling process of each tenant is a scheduling task of each tenant) as a safe point, and then dividing a job scheduling process of the tenant into a plurality of slices by using the safe point as a division point. A size of a slice is runtime of the slice, and a size of one slice may range from 0.1 ms (millisecond) to 5 ms. For example, it takes about 1 ms to successfully schedule one job. Therefore, a scheduling process of one job may be considered as one subtask.

Optionally, a size of a slice is adjusted based on a tenant priority, for example, quality of service (QoS) of a tenant. Higher quality of service of a tenant indicates a smaller slice, that is, shorter slice runtime.

In some embodiments, a scheduling process of one tenant is divided based on a feature of the scheduling process. For example, the scheduling process includes a plurality of different phases, and it is determined whether each phase can be divided. For another example, the scheduling process includes a plurality of jobs, and a scheduling end point of each job is used as a division point.

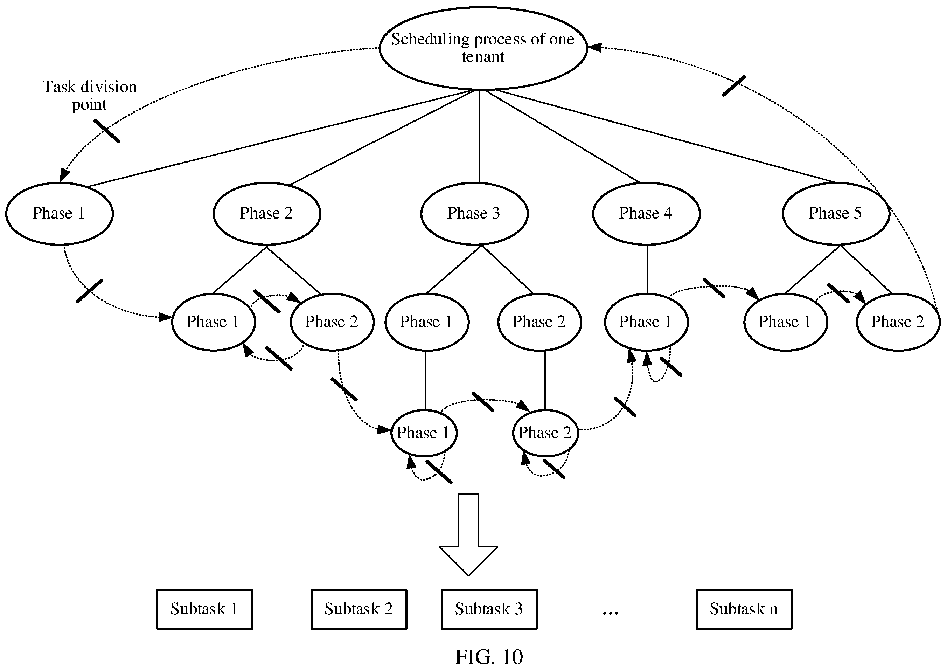

For example, referring to FIG. 10, it is assumed that a scheduling process of one tenant includes five phases. Some phases may further include a plurality of sub-phases, and the plurality of sub-phases may include serial, parallel, and cyclic processes and the like. A dashed line in FIG. 10 represents a scheduling process of one tenant. A scheduling task of one tenant is divided into a plurality of subtasks by dividing a scheduling process.

In some embodiments, when a scheduling process is divided at a source code level, a division identifier is added to an execution point at which division is required. When a scheduling thread executes a scheduling task, execution code from a current safe point to a next safe point is automatically generated and cached. For example, an annotation of @safepoint is added to the source code level, and a scheduling subtask is generated by using a bytecode enhancement technology.

For example, a code example of adding a division identifier is as follows:

```
          public void schedule (){
            while (running){
             @safepoint preShcedule ();
             @safepoint
             for (job job: jobs){
                Schedulejob (job);
               }
             @safepoint postSchedule ()
              }
            }
```

In an implementation, when a scheduling task is divided into a plurality of subtasks, executing the first scheduling task based on the scheduling priority includes: if the first scheduling task has a highest scheduling priority, executing a first subtask of the first scheduling task, and scheduling the first compute resource for the job task in the task queue of the first tenant, to execute the job task of the first tenant; then updating the scheduling priority of the first scheduling task; and if the first scheduling task with an updated scheduling priority does not have the highest scheduling priority, executing a second subtask of the second scheduling task, and scheduling the second compute resource for a job task in a task queue of the second tenant, to execute the job task of the second tenant. A scheduling task is divided, so that scheduling switching can be performed between scheduling tasks of different tenants, thereby implementing successful scheduling of scheduling tasks of different tenants and ensuring a task scheduling opportunity of each tenant.

For each scheduling thread created by the scheduler, a process in which the scheduler invokes the scheduling thread to perform task scheduling is similar. In the following embodiments, a process of task scheduling for a tenant is described in detail by using one scheduling thread as an example.

In an implementation, the scheduler invokes a scheduling thread, and periodically executes a plurality of scheduling tasks in the priority queue. In one scheduling period, the scheduler traverses a plurality of scheduling tasks in one priority queue. For each scheduling task, in a scheduling period, the scheduling task includes several state parameters shown in Table 4.

**Table 4**

| State parameter of a scheduling task | Description |
|---|---|
| curr_num | Current subtask number (index) of the scheduling task |
| n_runtime | Elapsed runtime (or normalized runtime) of the scheduling task |
| r_runtime | Remaining runtime of the scheduling task |
| state | Task state of the scheduling task |

It should be understood that a scheduling priority of a scheduling task is related to elapsed runtime (n_runtime) of the scheduling task (n_runtime is related to a tenant priority). In one scheduling period, the scheduling priority of the scheduling task decreases as the elapsed runtime of the scheduling task increases. Smaller elapsed runtime of the scheduling task indicates a higher scheduling priority of the scheduling task.

Optionally, in one priority queue, scheduling tasks are arranged in ascending order of n_runtime. In some cases, if a plurality of scheduling tasks have equal n_runtime, scheduling tasks of tenants may be sorted based on tenant names or may be randomly sorted. This is not limited in embodiments of this application.

In one scheduling period, runtime may be allocated to each scheduling task based on quality of service of a tenant. Runtime of one scheduling task is T*QoS, where T is duration of a scheduling period, and QoS is quality of service of a tenant. A sum of the elapsed runtime n_runtime and the remaining runtime r_runtime of the foregoing scheduling task is T*QoS.

In an implementation, in this embodiment of this application, a task state may be further set for each scheduling task. For example, the state (state) of the scheduling task may include a ready state, a running state, a sleeping state, and a blocked state. The ready state indicates that the scheduling task is in a to-be-executed state. The running state indicates that the scheduling task is in an executing state. The sleeping state indicates that the scheduling task is in a dormant state, and indicates that the tenant currently has no job. The blocked state indicates that the scheduling task is in a locked state, and indicates that runtime of the scheduling task in a current scheduling period is used up, that is, the scheduling task cannot be executed.

With reference to Table 4, it may be understood that each state parameter of the scheduling task dynamically changes in one scheduling period.

In an implementation, during initialization (that is, when the scheduling task is started), each state parameter of the scheduling task may be set as follows: curr_num=0, n_runtime=0, r_runtime=T*QoS, and state=ready.

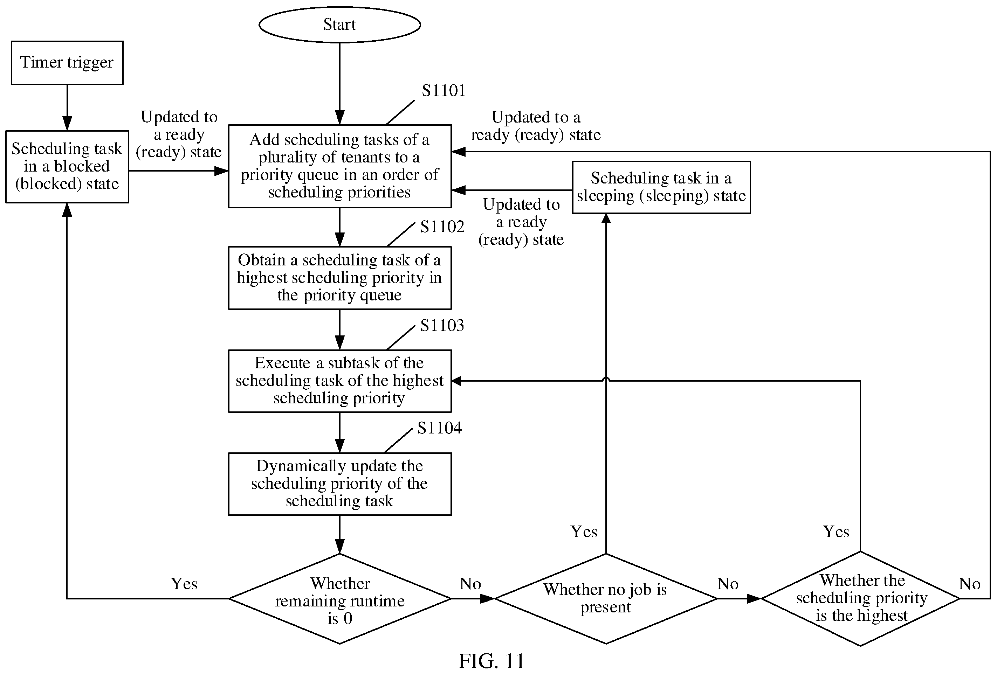

As shown in FIG. 11, when a plurality of scheduling tasks share one scheduling thread, in one scheduling period, a process in which the scheduler schedules one scheduling thread to execute scheduling tasks of a plurality of tenants includes S1101 to S1104.

S1101: Add the scheduling tasks of the plurality of tenants to the priority queue in an order of scheduling priorities.

It should be understood that, in a task scheduling process, a scheduling task in the priority queue is a to-be-scheduled task, that is, a state of the scheduling task in the priority queue is a ready state. When the state of the scheduling task is updated to a sleeping state or a blocked state, the scheduling task is removed from the priority queue. In this way, another tenant is given a scheduling opportunity, for example, a task scheduling opportunity may be given for a tenant having few job tasks.

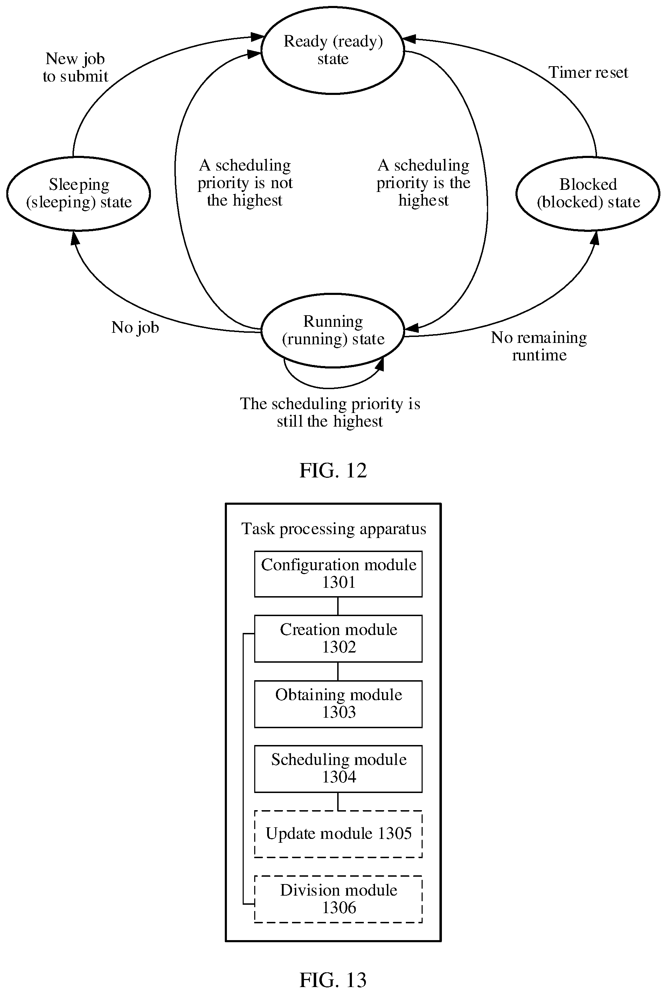

Referring to FIG. 12, the first scheduling task of the first tenant is used as an example to describe a process of switching between various states of the first scheduling task.

In one scheduling period, when the first scheduling task is moved into the priority queue, the first scheduling task is in a ready state, and when the scheduling priority of the first scheduling task is the highest, the scheduling thread executes the first scheduling task, and the first scheduling task switches from a ready state to a running state.

After one subtask of the first scheduling task is executed, the first scheduling task has remaining runtime, and the scheduling priority of the first scheduling task is not the highest. In this case, the first scheduling task switches from a running state to a ready state.

After one subtask of the first scheduling task is executed, the first scheduling task has no remaining runtime. In this case, the first scheduling task switches from a running state to a blocked state.

After one subtask of the first scheduling task is executed, if the first tenant has no job to execute, the first scheduling task switches from a running state to a sleeping state. The tenant may be considered as an idle tenant.

When the first tenant has a new job to submit, the first tenant changes from having no job to execute to having a job to execute, and the first scheduling task switches from a sleeping state to a ready state.

When a timer (used for a timing scheduling period) is triggered again after being reset, if the first scheduling task switches to a blocked state in a previous period, the first scheduling task switches from a blocked state to a ready state when the timer is triggered again.

In this embodiment of this application, there are the following several cases of starting the timer and adding the plurality of scheduling tasks to the priority queue in an order of the scheduling priorities:

1. If the scheduler invokes a scheduling thread for the first time, all scheduling tasks that need to be executed by the scheduling thread are set to ready states, and are arranged in descending order of scheduling priorities. In addition, during initialization, because n_runtime of all scheduling tasks is initialized to 0, the scheduling tasks may be arranged based on tenant names or randomly arranged.

2. A scheduling task in a blocked state is added to the priority queue, and the scheduling task switches to a ready state.

3. For a tenant having no job (a scheduling task of the tenant is in a sleeping state), when the tenant has a new job to submit, the scheduling task of the tenant is added to the priority queue, and the scheduling task switches to a ready state.

S1102: Obtain a scheduling task of a highest scheduling priority in the priority queue.

After the scheduling task of the highest scheduling priority in the priority queue is obtained, the scheduling task switches from a ready state to a running state.

In an implementation, if there is no scheduling task in the priority queue, a scheduling task may be obtained from another priority queue and executed, thereby improving resource utilization of the management node. A state of a scheduling task obtained from a priority queue of another scheduling thread is updated to a running state.

S1103: Execute a subtask of the scheduling task of the highest scheduling priority.

For one scheduling task, a plurality of subtasks included in the scheduling task are arranged in an order of numbers of the subtasks, for example, the subtasks are executed in ascending order of the numbers of the subtasks. In this embodiment of this application, in a process of executing one subtask, the scheduler records runtime (denoted as delta) of the subtask. After one subtask is executed, a number curr_num of a current subtask of the scheduling task, elapsed runtime n_runtime of the scheduling task, and remaining runtime r_runtime of the scheduling task are updated as follows: $curr_num = curr_num + 1 ;$ $n_runtime = n_runtime + delta * 1024 / weight ;$ and $r_runtime = max \left(0, r_runtime-delta\right) .$

Herein, "weight" indicates a tenant weight of a tenant.

S1104: Dynamically update the scheduling priority of the scheduling task.

In an implementation, the first scheduling task is used as an example. The scheduling priority of the first scheduling task may be dynamically updated based on the elapsed runtime (n_runtime) of the first scheduling task. Specifically, the elapsed runtime (n_runtime) of the first scheduling task is updated, and then the scheduling priority of the first scheduling task is updated based on elapsed runtime of each scheduling task in the priority queue.

Dynamically updating the scheduling priority of the scheduling task actually is updating the priority queue. If sorting of the elapsed runtime of each scheduling task in the priority queue changes, the scheduling priority of the scheduling task also changes. For example, if the first scheduling task is a scheduling task of a highest scheduling priority in the priority queue, after one subtask of the first scheduling task is executed, the elapsed runtime of the first scheduling task is no longer a scheduling task with smallest elapsed runtime in the priority queue. In this case, the scheduling priority of the first scheduling task is updated, and the scheduling priority of the first scheduling task is no longer the highest scheduling priority.

In one scheduling period, after a subtask of one scheduling task is executed, a state of the scheduling task also needs to be updated. It should be noted that, after the state of the scheduling task is updated, scheduling tasks in a blocked state and a sleeping state are removed from the priority queue, and remaining scheduling tasks in the priority queue are re-sorted based on updated scheduling priorities.

The first scheduling task is used as an example. If the remaining runtime r_runtime of the first scheduling task is equal to 0, the state of the first scheduling task is updated to a blocked state, elapsed runtime n_runtime=T*QoS, and the first scheduling task is removed from the priority queue.

If r_runtime of the first scheduling task is not equal to 0, and the first scheduling task has no job, the state of the first scheduling task is updated to a sleeping state, and the elapsed runtime of the first scheduling task is updated as follows: n_runtime=n_runtime-min(n_runtime1, ...), where min(n_runtime1, ...) indicates a minimum value of elapsed runtime of all scheduling tasks that need to be executed by the scheduling thread. It should be noted that subsequently, when the first scheduling task has a job to submit again, the state of the first scheduling task is updated from a sleeping state to a ready state, and n_runtime of the first scheduling task is updated as follows: n_runtime=n_runtime+min(n_runtime1, ...).

It may be understood that, when the first scheduling task has no job, the first scheduling task is not executed any more. In a current scheduling period, the elapsed runtime of the first scheduling task remains unchanged. As another scheduling task is executed, elapsed runtime of the another scheduling task increases. When the first scheduling task has a job to submit, the first scheduling task has the highest scheduling priority compared with another scheduling task, and the scheduling thread preferentially executes the first scheduling task, and does not execute the another scheduling tasks for a long time. To ensure fairness of task scheduling between a plurality of tenants, the elapsed runtime of the first scheduling task is updated, to properly increase the elapsed runtime of the first scheduling task, so that another scheduling task cannot be scheduled for a long time, and more scheduling opportunities can be obtained for other scheduling to some extent.

If r_runtime of the first scheduling task is not equal to 0, and the first scheduling task has a job, the state of the scheduling task is determined based on the scheduling priority of the first scheduling task. It can be learned from the foregoing embodiment that, after one subtask is executed, n_runtime of the first scheduling task=n_runtime+delta*1024/weight, and the state of the first scheduling task is updated based on n_runtime. If n_runtime of the first scheduling task is the smallest in n_runtime of the plurality of scheduling tasks, the state of the first scheduling task remains in a running state. If n_runtime of the first scheduling task is not the smallest in n_runtime of the plurality of scheduling tasks, the state of the first scheduling task is updated to a ready state.

It should be noted that, when the second tenant is newly added to the computing cluster, the second scheduling task is started for the second tenant, and the second scheduling task is mapped to one scheduling thread of the scheduler. In this case, n_runtime of the second scheduling task is set as follows: n_runtime=min(n_runtime1, ...)+0.5 ms, a state of the priority queue is set to a ready state, and the second scheduling task is added to the priority queue.

In this embodiment of this application, in one scheduling period, S1102 to S1104 are repeatedly performed until the timer expires.

It may be understood that the foregoing method is performed by a task processing apparatus (the task processing apparatus may be a scheduler deployed on a management node). To implement the foregoing functions, the task processing apparatus includes a corresponding hardware structure and/or software module for performing each function. A person skilled in the art should be easily aware that, in combination with methods and steps in the examples described in embodiments disclosed in this specification, embodiments of this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that this implementation goes beyond the scope of embodiments of this application.

In embodiments of this application, the task processing apparatus is divided into functional modules based on the foregoing method examples. For example, each functional module corresponding to each function may be obtained through division, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used.

When each functional module corresponding to each function is obtained through division, FIG. 13 is a diagram of a possible structure of the task processing apparatus in the foregoing embodiments. The task processing apparatus includes a configuration module 1301, a creation module 1302, an obtaining module 1303, and a scheduling module 1304.

The configuration module 1301 is configured to perform S701 in the foregoing method embodiments. The creation module 1302 is configured to perform S702 in the foregoing method embodiments. The obtaining module 1303 is configured to perform S703 and S1102 in the foregoing method embodiments. The scheduling module 1304 is configured to perform S704 and S1103 in the foregoing method embodiments.

Optionally, the task processing apparatus provided in this embodiment of this application further includes an update module 1305 and a division module 1306. The update module 1305 is configured to perform S1104 in the foregoing method embodiments. The division module 1306 is configured to divide a scheduling task into a plurality of subtasks.

The modules of the foregoing task processing apparatus can also be configured to perform other actions in the foregoing method embodiments. All related content of the steps in the foregoing method embodiments may be cited in function descriptions of the corresponding functional modules. Details are not described herein again.

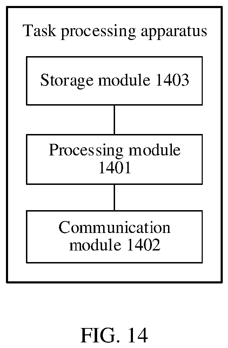

When an integrated unit is used, FIG. 14 is a diagram of another possible structure of the task processing apparatus in the foregoing embodiments. As shown in FIG. 14, the task processing apparatus provided in this embodiment of this application may include a processing module 1401 and a communication module 1402. The processing module 1401 may be configured to control and manage an action of the task processing apparatus. For example, the processing module 1401 may be configured to support the configuration module 1301, the creation module 1302, the obtaining module 1303, the scheduling module 1304, the update module 1305, and the division module 1306 in FIG. 14 in performing corresponding steps, and/or another process of the technology described in this specification. The communication module 1402 may be configured to support the task processing apparatus in communicating with another network entity. As shown in FIG. 14, the task processing apparatus may further include a storage module 1403, configured to store computer instructions and data.

The processing module 1401 may be a processor or a controller (for example, the processing module 1401 may be the processor 401 in FIG. 4). Alternatively, the processing module 1401 may be a combination that implements a computing function, for example, a combination of one or more microprocessors, or a combination of a DSP and a microprocessor. The communication module 1402 may be a communication interface (for example, the communication module 1402 may be the communication interface 403 in FIG. 4). The storage module 1403 may be a storage (for example, the storage module 1403 may be the memory 402 in FIG. 4). When the processing module 1401 is a processor, the communication module 1402 is a communication interface, and the storage module 1403 is a storage, the processor, a transceiver, and the storage may be connected through a bus.

For more details of implementing the functions by the modules included in the foregoing task processing apparatus, refer to descriptions in the foregoing method embodiments. Details are not described herein again. Embodiments of this specification are described in a progressive method. For same or similar parts in the embodiments, references can be made to each other. Each embodiment focuses on differences from other embodiments.

All or some of the foregoing embodiments may be implemented by using software, hardware, firmware, or any combination thereof. When a software program is used to implement embodiments, all or some embodiments may be implemented in a form of a computer program product. The computer program product includes one or more computer instructions. When the computer instructions are loaded and executed on a computer, all or some of the procedures or functions according to embodiments of this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a magnetic disk, or a magnetic tape), an optical medium (for example, a digital video disc (digital video disc, DVD)), a semiconductor medium (for example, a solid-state drive (solid-state drive, SSD)), or the like.

The foregoing descriptions about implementations allow a person skilled in the art to understand that, for the purpose of convenient and brief description, division into the foregoing functional modules is used as an example for illustration. During actual application, the foregoing functions can be allocated to different functional modules and implemented as required, that is, an inner structure of an apparatus is divided into different functional modules to implement all or some of the functions described above. For a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the modules or units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one place, or may be distributed on a plurality of network units. Some or all of the units may be selected according to actual requirements to achieve the objectives of the solutions of embodiments.

In addition, functional units in embodiments of this application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium, and includes several instructions for instructing a computer device (which may be a personal computer, a server, a network device, or the like) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A task scheduling method, applied to a management node in a computing cluster, wherein the method comprises:
setting a first compute resource for a first tenant;
when a job task of the first tenant needs to be executed, starting a first scheduling task for the first tenant, wherein the first scheduling task is used to schedule a compute resource for the job task of the first tenant;
obtaining the job task of the first tenant, and sending the job task to a task queue of the first tenant; and
executing the first scheduling task, and scheduling the first compute resource for the job task in the task queue, to execute the job task.

2. The method according to claim 1, wherein the method further comprises:
setting a scheduling policy for the first tenant; and
scheduling the first compute resource for the job task in the task queue comprises:
scheduling the first compute resource for the job task in the task queue based on the scheduling policy.

3. The method according to claim 1 or 2, wherein the method further comprises:
setting a tenant priority for the first tenant, wherein the tenant priority is used to determine a scheduling priority of the first scheduling task; and
executing the first scheduling task comprises:
executing the first scheduling task based on the scheduling priority.

4. The method according to claim 3, wherein executing the first scheduling task based on the scheduling priority comprises:
determining whether the first scheduling task in a priority queue has a highest scheduling priority, wherein the priority queue further comprises a second scheduling task of a second tenant; and
if the first scheduling task has the highest scheduling priority, executing the first scheduling task; or if the first scheduling task does not have the highest scheduling priority, executing the second scheduling task.

5. The method according to claim 3, wherein the method further comprises:
dynamically updating the scheduling priority of the first scheduling task based on elapsed runtime of the first scheduling task.

6. The method according to claim 3, wherein the computing cluster further comprises a second tenant, and a second compute resource of the second tenant and the first compute resource of the first tenant share a physical compute resource of the computing cluster; and the method further comprises:
separately dividing the first scheduling task and a second scheduling task of the second tenant into a plurality of subtasks; and
executing the first scheduling task based on the scheduling priority comprises:
if the first scheduling task has a highest scheduling priority, executing a first subtask of the first scheduling task, and scheduling the first compute resource for the job task in the task queue of the first tenant, to execute the job task of the first tenant;
updating the scheduling priority of the first scheduling task; and
if the first scheduling task with an updated scheduling priority does not have the highest scheduling priority, executing a second subtask of the second scheduling task, and scheduling the second compute resource for a job task in a task queue of the second tenant, to execute the job task of the second tenant.

7. A task scheduling apparatus, used in a management node in a computing cluster, wherein the task scheduling apparatus comprises a configuration module, a creation module, an obtaining module, and a scheduling module, wherein
the configuration module is configured to set a first compute resource for a first tenant;
the creation module is configured to: when a job task of the first tenant needs to be executed, start a first scheduling task for the first tenant, wherein the first scheduling task is used to schedule a compute resource for the job task of the first tenant;
the obtaining module is configured to obtain the job task of the first tenant, and send the job task to a task queue of the first tenant; and
the scheduling module is configured to execute the first scheduling task, and schedule the first compute resource for the job task in the task queue, to execute the job task.

8. The task scheduling apparatus according to claim 7, wherein
the configuration module is further configured to set a scheduling policy for the first tenant; and
the scheduling module is specifically configured to schedule the first compute resource for the job task in the task queue based on the scheduling policy.

9. The task scheduling apparatus according to claim 7 or 8, wherein
the configuration module is further configured to set a tenant priority for the first tenant, wherein the tenant priority is used to determine a scheduling priority of the first scheduling task; and
the scheduling module is specifically configured to execute the first scheduling task based on the scheduling priority.

10. The task scheduling apparatus according to claim 9, wherein
the scheduling module is specifically configured to: determine whether the first scheduling task in a priority queue has a highest scheduling priority, wherein the priority queue further comprises a second scheduling task of a second tenant; and if the first scheduling task has the highest scheduling priority, execute the first scheduling task; or if the first scheduling task does not have the highest scheduling priority, execute the second scheduling task.

11. The task scheduling apparatus according to claim 9, further comprising an update module,
wherein
the update module is configured to dynamically update the scheduling priority of the first scheduling task based on elapsed runtime of the first scheduling task.

12. The task scheduling apparatus according to claim 9, wherein the computing cluster further comprises a second tenant, and a second compute resource of the second tenant and the first compute resource of the first tenant share a physical compute resource of the computing cluster; and the task scheduling apparatus further comprises a division module and an update module, wherein
the division module is configured to separately divide the first scheduling task and a second scheduling task of the second tenant into a plurality of subtasks;
the scheduling module is specifically configured to: if the first scheduling task has a highest scheduling priority, execute a first subtask of the first scheduling task, and schedule the first compute resource for the job task in the task queue of the first tenant, to execute the job task of the first tenant;
the update module is configured to update the scheduling priority of the first scheduling task; and
the scheduling module is further configured to: if the first scheduling task with an updated scheduling priority does not have the highest scheduling priority, execute a second subtask of the second scheduling task, and schedule the second compute resource for a job task in a task queue of the second tenant, to execute the job task of the second tenant.

13. A computer-readable storage medium, storing computer instructions, wherein when the computer instructions are run on a computer, the method according to any one of claims 1 to 6 is performed.

14. A computer program product, comprising instructions, wherein when the instructions are run by a compute device, the compute device is caused to perform the method according to any one of claims 1 to 6.
